# EUROPEAN PATENT APPLICATION

(11) **EP 4 266 794 A1**
(43) Date of publication of application: **25.10.2023**
(21) Application number: 22884774.5
(22) Date of filing: 01.03.2022
(51) Int. Cl.: H04W 72/04

(54) **PROCESSING METHOD, COMMUNICATION DEVICE, AND STORAGE MEDIUM**

(71) Applicant: Shenzhen Transsion Holdings Co., Ltd., Shenzhen, Guangdong 518057 (CN)
(72) Inventor: ZHU, Rongchang, Shenzhen, Guangdong 518057 (CN); HUANG, Wei, Shenzhen, Guangdong 518057 (CN); HUANG, Junwei, Shenzhen, Guangdong 518057 (CN)
(74) Representative: Osterhoff, Utz
(86) International application number: PCT/CN2022/078613
(87) International publication number: WO 2023/164804

(57) **Abstract**

The present application relates to the field of wireless communication technology and provides a processing method, a communication device and a storage medium, the method includes: receiving at least one first indication, receiving information according to the first indication, the first indication is used to indicate an LBT mode and/or a non-LBT mode. By the above means, it is determined whether LBT is required or not according to the indicated LBT mode and/or non-LBT mode, and the information is received according to the corresponding mode, to increase the chance of receiving CSI-RS and/or reduce the probability of receiving CSI-RS false alarms.

## Description

### TECHNICAL FIELD

The present application relates to the field of wireless communication technology, and specifically to a processing method, a communication device and a storage medium.

### BACKGROUND

If the cell is operating on unlicensed spectrum, the base station or terminal device needs to perform a listen before talk (LBT) to compete for the channel before transmitting. This means that if the LBT fails, the base station cannot transmit data at the preset location. Then the terminal device needs to determine whether to receive the semi-persistent or periodic channel state information-reference signal (CSI-RS). If the cell is operating on the licensed spectrum and the semi-persistent or periodic CSI-RS does not fall on the uplink slot or symbol, the terminal device receives the semi-persistent or periodic CSI-RS at the corresponding location.

In conceiving and implementing the present application, at least the following problems are found by the inventors: in the band range FR2-2, a cell operates on unlicensed spectrum, the terminal device needs no LBT in some directions, but needs the LBT in other directions. Therefore, some semi-persistent CSI-RS or periodic CSI-RS transmitted in different directions may need the LBT and some may not need the LBT. If only one type of judgement is used, it may result in a reduced chance of receiving CSI-RS by the terminal device or an increased probability of falsely receiving CSI-RS by the terminal device.

The aforementioned is to provide general background information and does not necessarily constitute related art.

### SUMMARY

In response to the above technical problems, the present application provides a processing method, a communication device, and a storage medium. Whether LBT is required is determined by indicating the LBT mode and/or non-LBT mode, to increase the chance of receiving CSI-RS and/or reduce the probability of receiving CSI-RS false alarms.

In order to solve the above technical problem, the present application provides a processing method, applied on the terminal device, the method includes:
S10: receiving at least one first indication; and
S20: receiving information according to the first indication, the first indication indicating a listen before talk (LBT) mode and/or a non-LBT mode.

In an embodiment, the first indication is carried in at least one radio resource control (RRC) message.

In an embodiment, the method further includes at least one of:
the RRC message including at least one of a UE-specific RRC message, a system information message and/or a common RRC message;
the UE-specific RRC message including at least one of: the LBT mode, the non-LBT mode, and a non-received mode; and
the system information message and/or the common RRC message including at least one of: the LBT mode, the non-LBT mode, and the non-received mode.

In an embodiment, the method further includes: determining the LBT mode and/or the non-LBT mode by a combined analysis of preset determination rules based on at least one of the UE-specific RRC message, the system information message and/or the common RRC message.

In an embodiment, the first indication comprises the LBT mode, the S20 includes:
receiving the information according to the first indication in response to that received information satisfies a preset condition.

In an embodiment, the preset condition includes at least one of:
the received information being within a channel occupancy time (COT) indicated by control information;
the received information being within remaining time of the COT indicated by the control information;
a beam used by a physical downlink control channel (PDCCH), which carries the control information, satisfying quasi-co-location (QCL) with a beam used by the received information; and
demodulation reference signal (DMRS) port information and/or transmission configuration index (TCI) of the PDCCH, which carries the control information, using the same spatial filter as the received information.

In an embodiment, the method further includes at least one of:
the received information being a channel state information-reference signal (CSI-RS);
the received information being a periodic CSI-RS or a semi-persistent CSI-RS;
the control information being DCI 2-0;
a state of the QCL being QCL typeD;
each TCI including a reference signal and/or at least one state of the QCL;
the beam used by the PDCCH being determined by the beam used by an associated reference signal; and
the reference signal including at least a synchronization signal block (SSB) or the CSI-RS.

In an embodiment, the preset condition includes at least one of:
no control information being received, or the control information being received but not indicating the COT and the received information being within an aperiodic CSI-RS or a dynamically scheduled physical downlink shared channel (PDSCH);
the aperiodic CSI-RS, or the dynamically scheduled PDSCH, or associated PDCCH, satisfying quasi-co-location with the received information; and
resources occupied by the received information overlapping and/or being adjacent to resources occupied by the aperiodic CSI-RS or the dynamically scheduled PDSCH in a time domain.

In an embodiment, the first indication includes the non-LBT mode, the S20 includes:
receiving information, in response to that a time domain symbol where the received information is located doesn't fall on an uplink slot and/or symbol.

The present application provides a processing method, applied on the terminal, including:
receiving information in response to received information satisfying a preset condition.

In an embodiment, the received information includes: receiving the information according to a first indication.

In an embodiment, the method further includes at least one of:
the first indication indicating a listen before talk (LBT) mode and/or a non-LBT mode;
the first indication being carried in at least one radio resource control (RRC) message.

In an embodiment, the method further includes at least one of:
the RRC message including at least one of a UE-specific RRC message, a system information message and/or a common RRC message;
the UE-specific RRC message including at least one of the LBT mode, the non-LBT mode, and a non-received mode; and
the system information message and/or common RRC message including at least one of the LBT mode, the non-LBT mode, and the non-received mode.

In an embodiment, the method further includes:
determining the LBT mode and/or the non-LBT mode by a combined analysis of preset determination rules based on at least one of the UE-specific RRC message, the system information message and/or the common RRC message.

In an embodiment, the first indication includes the LBT mode, the preset condition includes at least one of:
the received information being within a channel occupancy time (COT) indicated by control information;
the received information being within remaining time of the COT indicated by the control information;
a beam used by a physical downlink control channel (PDCCH), which carries the control information, satisfying quasi-co-location (QCL) with a beam used by the received information; and
demodulation reference signal (DMRS) port information and/or transmission configuration indication (TCI) information of the PDCCH, which carries the control information, using the same spatial filter as the received information.

In an embodiment, the method further includes at least one of:
the received information being a channel state information-reference signal (CSI-RS);
the received information being a periodic CSI-RS or a semi-persistent CSI-RS;
the control information being DCI 2-0;
a state of the QCL being QCL typeD;
each TCI including a reference signal and/or at least one state of the QCL;
the beam used by the PDCCH being determined by the beam used by an associated reference signal; and
the reference signal including at least a synchronization signal block (SSB) or the CSI-RS.

In an embodiment, the preset condition includes at least one of the following:
no control information being received, or the control information being received but not indicating the COT and the received information being within an aperiodic CSI-RS or a dynamically scheduled physical downlink shared channel (PDSCH);
the aperiodic CSI-RS, or the dynamically scheduled PDSCH, or associated PDCCH, satisfying quasi-co-location with the received information; and
resources occupied by the received information overlapping and/or being adjacent to resources occupied by the aperiodic CSI-RS or the dynamically scheduled PDSCH in the time domain.

In an embodiment, the first indication includes the non-LBT mode, the preset condition includes:
receiving information in response to that a time domain symbol where the received information is located doesn't fall on an uplink slot and/or symbol.

The present application provides a processing method, applied on the internet device, including:
S30: configuring a first indication, the first indication being configured for a terminal device to receive information and indicating a listen before talk (LBT) mode and/or a non-LBT mode.

In an embodiment, the method further includes:
configuring, by a radio resource control (RRC) message, a resource location transmitted by receiving information for the terminal device.

In an embodiment, the resource location includes at least one of: a time domain location, a frequency domain location, and a code domain location.

In an embodiment, the method further includes: the terminal device is configured that a link with the terminal device operates in the LBT mode or the non-LBT mode, via a system information message and/or a common RRC message and/or a UE-specific RRC message.

The present application provides a communication device, including: a memory storing a processing program and a processor, wherein the processing program, in response to that executed by the processor, implements steps according to any one of the processing methods as mentioned above.

The communication device in the present application can be a terminal device (such as a cell phone) or a network device (such as a base station), and the specific designation needs to be determined in context.

The present application provides a computer readable storage medium, storing a processing program, the computer program in response to that executed by the processor implements steps according to any one of the processing methods as mentioned above.

The processing method of the present application includes receiving at least one first indication; and receiving information according to the first indication, the first indication indicating a listen before talk (LBT) mode and/or a non-LBT mode. In the above method, it is determined whether LBT is required or not according to the indicated LBT mode and/or non-LBT mode, and the information is received according to the corresponding mode, to increase the chance of receiving CSI-RS and/or reduce the probability of receiving CSI-RS false alarms.

### BRIEF DESCRIPTION OF THE DRAWINGS

The drawings herein are incorporated into the specification to form a part of the specification, and illustrate embodiments consistent with the present application, and are used in conjunction with the specification to explain the principles of the present application. In order to more clearly illustrate the technical solutions of the embodiments of the present application, the drawings in the description of the embodiments will be simply introduced as below. It is obvious for those skilled in the art to obtain other drawings on the basis of these drawings without any creative labor.
FIG. 1 is a schematic diagram of a hardware structure of a mobile terminal implementing various embodiments of the present application.
FIG. 2 is a view of a communication network system architecture according to embodiments of the present application.
FIG. 3 is a flowchart of a processing method according to a first embodiment.
FIG. 4 is a flowchart of a processing method according to a second embodiment.
FIG. 5 is a flowchart of a processing method according to a third embodiment.
FIG. 6 is a flowchart of a processing method according to a fourth embodiment.
FIG. 7 is a flowchart of a processing method according to a fifth embodiment.
FIG. 8 is a flowchart of a process method according to a sixth embodiment.
FIG. 9 is a flowchart of a processing method according to a seventh embodiment.
FIG. 10 is a flowchart of a processing method according to the eighth embodiment.
FIG. 11 is a flowchart of a processing method according to a ninth embodiment.
FIG. 12 is a flowchart of a processing method according to a tenth embodiment.
FIG. 13 is a flowchart of a processing method according to an eleventh embodiment.
FIG. 14 is a schematic view of an interaction for configuring a first indication according to an eleventh embodiment.
FIG. 15 is a schematic view of an interaction for configuring a type of receiving information according to the eleventh embodiment.

The implementation of the purpose, functional features and advantages of the present application will be further described in conjunction with the embodiments, with reference to the drawings. By the above drawings, specific embodiments of the present application have been shown and will be described in more detail later. These drawings and textual description are not intended to limit the conception scope of the present application by any means, but rather to illustrate the concepts of the present application for those skilled in the art with reference to particular embodiments.

### DETAILED DESCRIPTION OF THE EMBODIMENTS

Exemplary embodiments will be described herein in detail, examples are represented in the drawings, in response to that the following description relates to the drawings, unless otherwise indicated, the same numerals in different drawings indicate the same or similar elements. The embodiments described in the following exemplary embodiments do not represent all embodiments consistent with the present application. Rather, they are only examples of devices and methods that are consistent with some aspects of the present application, as detailed in the attached claims.

It should be noted that herein the terms "includes", "including", or any other variation thereof are intended to cover non-exclusive inclusion, such that a process, a method, an article, or an apparatus including a set of elements includes not only those elements, but also other elements not expressly listed, or elements inherent to such process, method, article, or device. Without more limitation, elements defined by the phrase "includes a ......" does not preclude additional identical elements in the process, method, article, or apparatus including these elements. In addition, parts, features, and elements having the same definition in different embodiments of the present application may have the same designation. In addition, the parts, features, and elements of different embodiments of the present application may have the same meaning or different meanings, their specific meanings are determined by their interpretation in the particular embodiment or further in conjunction with the context of the particular embodiment.

It should be understood that while the terms "first", "second", "third", etc. may be used herein to describe various information, such information should not be limited to these terms. These terms are used only to distinguish the same type of information from one another. For example, without departing from the scope of the present application, the first information may also be referred to as the second information, and similarly, the second information may also be referred to as the first information. Depending on the context, the word "if" herein may be interpreted as "at ......" or "in response to that ......" or "in response to determining....". Further, as used herein, the singular forms "a", "an" and "the" are intended to include the plural forms as well, unless opposite indication in the context otherwise. It is further understood that the terms "includes", "including" indicate the existence of the described features, steps, operations, components, assemblies, items, types, and/or groups, but do not exclude the existence, appearance, or addition of one or more other features, steps, operations, components, assemblies, items, types, and/or groups. The terms "or", "and/or", "including at least one of ..." etc. used in the present application may be interpreted to be inclusive, or to imply any one or any combination thereof. For example, "including at least one of....: A, B, C" means "any of: A; B; C; A and B; A and C; B and C; A and B and C", and, for example, "A, B or C" or "A, B and/or C" means "any of: A; B; C; A and B; A and C; B and C; A and B and C". Exceptions to this definition occur only in response to that combinations of components, functions, steps, or operations are inherently mutually exclusive in certain ways.

It should be understood that although the steps in the flowcharts in the embodiments of the present application are shown sequentially as indicated by the arrows, the steps are not necessarily performed sequentially in the order indicated by the arrows. Except as expressly stated herein, there is no strict sequential limitation on the execution of these steps, which may be performed in any other order. Moreover, at least some of the steps in the figures may include a plurality of sub-steps or a plurality of phases, which are not necessarily executed at the same moment, but may be executed at different moments, and the order of their execution is not necessarily sequential, but may be executed in turn or alternately with other steps or at least some of the sub-steps or phases of other steps.

Depending on the context, for example, the word "if" herein can be interpreted as "at ......" or "in response to that ......" or "in response to determining......" or "in response to detecting......". Similarly, depending on the context, the phrases "if determining......" or "if detecting......(stated condition or event)" can be interpreted as "in response to that determining......" or "in response to determining......" or "in response to that detecting...... (stated condition or event)" or "in response to detecting ......(stated condition or event)".

It should be noted that herein step designators such as S10, S20, etc. are used for the purpose of more clearly and concisely expressing the corresponding content, and do not constitute a substantive limitation on the order, and those skilled in the art may perform S20 and then S10, etc. in specific implementation, but these shall be within the scope of protection of the present application.

It should be understood that the specific embodiments described herein are used only to explain the present application and are not intended to limit the present application.

In the subsequent description, suffixes such as "module", "part", or "unit" are used to denote components only for the description of the present application and have no specific meaning. Thus, "module", "part", or "unit" may be mixed for use.
terminal devices can be implemented in a variety of forms. For example, the terminal devices described in the present application may include mobile terminals such as cell phones, tablets, laptops, personal digital assistants (PDAs), portable media players (PMPs), navigation devices, wearable devices, smart bracelets, pedometers, and fixed terminal devices such as digital TVs and desktop computers.

Mobile terminals will be taken as examples to describe in the subsequent description, it will be understood by those skilled in the art that the construction according to the embodiment of the present application can also be applied to fixed types of terminal devices, in addition to components used specifically for mobile purposes.

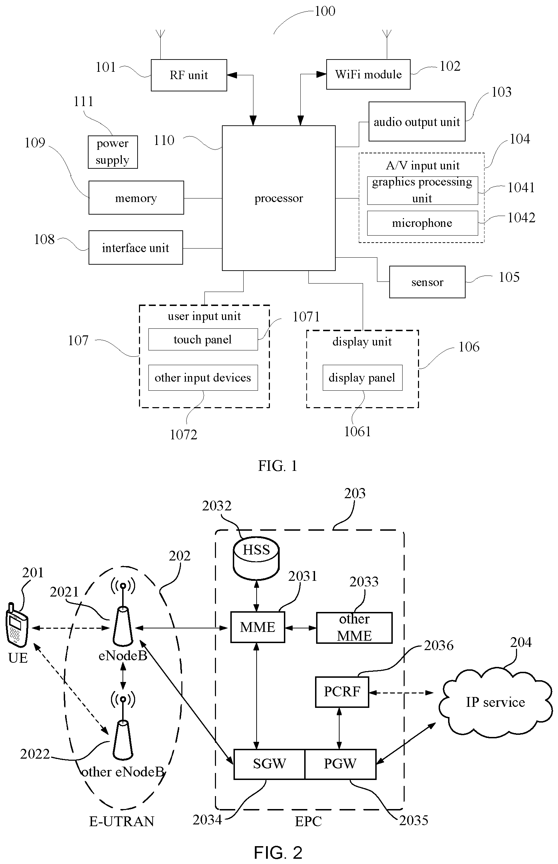

Referring to FIG. 1, which shows a schematic diagram of a hardware structure of a mobile terminal implementing various embodiments of the present application, the mobile terminal 100 may include a radio frequency (RF) unit 101, a WiFi module 102, an audio output unit 103, an A/V (audio/video) input unit 104, a sensor 105, a display unit 106, a user input unit 107, an interface unit 108, a memory 109, a processor 110, and a power supply 111, etc. It will be understood by those skilled in the art that the mobile terminal structure illustrated in FIG. 1 does not limit the mobile terminal, and that the mobile terminal may include more or fewer components than illustrated in figures, or a combination of certain components, or a different arrangement of components.

The components of the mobile terminal are described specifically in the following in conjunction with FIG. 1.

The RF unit 101 may be used for receiving and transmitting signals during transmitting and receiving information or calls. Downlink information is received from the base station and transmitted to processor 110 for processing. In addition, the uplink data is transmitted to the base station. Typically, the RF unit 101 includes, but is not limited to, an antenna, at least one amplifier, a transceiver, a coupler, a low noise amplifier, a duplexer, etc. In addition, the RF unit 101 can also wirelessly communicate with networks and other devices. The above wireless communication may use any communication standard or protocol, including but not limited to global system of mobile communication (GSM), general packet radio service (GPRS), code division multiple access 2000 (CDMA2000), wideband code division multiple access (WCDMA), time division-synchronous code term evolution, time division duplexing- long term evolution (TD-SCDMA) and 5G, etc.

WiFi belongs to a short-range wireless transmission technology, and mobile terminals can help users transmit and receive emails, browse the web and access streaming media, etc. through WiFi module 102, which provides users with a wireless broadband Internet access. Although the WiFi module 102 is illustrated in FIG. 1, it is understood that it is not a necessary component of the mobile terminal and can be omitted completely as needed without changing the essence of the present application.

The audio output unit 103 can convert the audio data received by the RF unit 101 or the WiFi module 102 or stored in the memory 109 into audio signals and output them as sound in response to that the mobile terminal 100 is in the call signal reception mode, the call mode, the recording mode, the voice recognition mode, the broadcast reception mode, and so on. Moreover, the audio output unit 103 may also provide audio output related to a specific function performed by the mobile terminal 100 (e.g., a call signal reception sound, a message reception sound, etc.). The audio output unit 103 may include a speaker, a buzzer, etc.

The A/V input unit 104 is used to receive audio or video signals. The A/V input unit 104 may include a graphics processing unit (GPU) 1041 and a microphone 1042. The graphics processing unit 1041 processes image data of still pictures or videos obtained by an image capture device (e.g., a camera) in the video capture mode or the image capture mode. The processed image frames may be displayed on the display unit 106. The image frames processed by the graphics processor 1041 may be stored in the memory 109 (or other storage media) or transmitted via the RF unit 101 or the WiFi module 102. The microphone 1042 can receive sound (audio data) via the microphone 1042 in telephone call mode, recording mode, voice recognition mode, and other modes, and can process such sound into the audio data. The processed audio (voice) data can be converted in telephone call mode to an output in a format that can be transmitted to a mobile communication base station via the RF unit 101. The microphone 1042 may implement various types of noise cancellation (or suppression) algorithms to eliminate (or suppress) noise or interference generated in the process of receiving and transmitting audio signals.

The mobile terminal 100 also includes at least one sensor 105, such as a light sensor, a motion sensor, and other sensors. The light sensors include an ambient light sensor and a proximity sensor. The ambient light sensor adjusts the brightness of the display panel 1061 based on the brightness of the ambient light, and the proximity sensor turns off the display panel 1061 and/or the backlight in response to that the mobile terminal 100 is placed near the ear. As a kind of motion sensor, the accelerometer sensor can detect the magnitude of acceleration in all directions (generally three axes), and detect the magnitude and direction of gravity in response to that stationary, and can be used for applications that identify the phone's posture (e.g., switching between horizontal screen and vertical screen, related games, magnetometer posture calibration), vibration recognition-related functions (e.g., pedometer, tapping), etc. The phone can also be configured with a fingerprint sensor, a pressure sensor, an iris sensor, a molecular sensor, a gyroscope, a barometer, a hygrometer, a thermometer, an infrared sensor and other sensors, which are not repeated here.

The display unit 106 is used to display information input by the user or provide information to the user. The display unit 106 may include a display panel 1061, which may be configured with a liquid crystal display (LCD), an organic light-emitting diode (OLED), etc.

The user input unit 107 can be used to receive input numeric or character information, and to generate key signal input related to the user settings of the mobile terminal and the function control. The user input unit 107 may include a touch panel 1071 and other input devices 1072. The touch panel 1071, also known as a touch screen, may collect user's touch operations on or near it (e.g., user's operations on or near the touch panel 1071 by using any suitable object or attachment such as a finger, stylus, etc.), and drive the corresponding connection device according to a preset program. The touch panel 1071 may include a touch detection device and a touch controller. The touch detection device detects the user's touch orientation and detects the signal from the touch operation and transmits the signal to the touch controller. The touch controller receives the touch information from the touch detection device and converts it into contact coordinates and transmits it to the processor 110 and can receive and execute commands from the processor 110. In addition, a resistor, a capacitance, infrared ray, and surface acoustic wave, etc. can be used to implement the touch panel 1071. In addition to the touch panel 1071, the user input unit 107 can also include other input devices 1072. The other input devices 1072 can include, but are not limited to, one or more of: physical keyboards, function keys (such as volume control buttons, switch buttons, etc.), trackballs, mice, joystick, etc., which are not limited here.

In an embodiment, the touch panel 1071 may cover the display panel 1061, and in response to that the touch panel 1071 detects a touch operation on or near it, it transmits the touch operation to the processor 110 to determine the type of touch event, and then the processor 110 provides a corresponding visual output on the display panel 1061 based on the type of touch event. Although in FIG. 1, the touch panel 1071 and the display panel 1061 are used as two separate components to implement the input and output functions of the mobile terminal. In some embodiments, the touch panel 1071 can be integrated with the display panel 1061 to implement the input and output functions of the mobile terminal, which will not be limited here.

The interface unit 108 serves as an interface through which at least one external device can be connected to the mobile terminal 100. For example, external devices may include wired or wireless headset ports, external power (or battery charger) ports, wired or wireless data ports, memory card ports, ports for connecting devices with identification modules, audio input/output (I/O) ports, video I/O ports, headphone ports, etc. The interface unit 108 may be used to receive input (e.g., data information, power, etc.) from an external device and transmit the received input to one or more elements within the mobile terminal 100 or may be used to transmit data between the mobile terminal 100 and the external devices.

The memory 109 may be used to store software programs and various data. The memory 109 may mainly include a stored program area and a stored data area. In an embodiment, the stored program area may store an operating system, an application program required for at least one function (such as a sound playback function, an image playback function, etc.), etc. The storage data area may store data created according to the usage of the mobile phone (such as audio data, phonebook, etc.), etc. Additionally, the memory 109 may include a high-speed random access memory, a non-volatile memory, such as at least one magnetic disk storage device, a flash memory device, or other volatile solid state storage device.

The processor 110, a control center of the mobile terminal, uses various interfaces and lines to connect various parts of the mobile terminal, runs or executes the software programs and/or modules stored in the memory 109, and calls the data stored in the memory 109, performs various functions of the mobile terminal and processes data, to entirely monitor the mobile terminal. The processor 110 may include one or more processing units. The processor 110 may integrate an application processor and a modulation-demodulation processor. The application processor mainly process the operation system, user interface and application program, etc. The demodulation processor mainly process wireless communication. It can be understood that, the above-mentioned modulation-demodulation processor may not be integrated into the processor 110.

The mobile terminal 100 may also include a power supply 111 (such as a battery) for supplying power to various components. The power supply 111 may be logically connected to the processor 110 through a power management system, to manage charging, discharging, and power consumption management through the power management system and other functions.

Although not shown in FIG. 1, the mobile terminal 100 may also include a Bluetooth module, etc., which will not be described herein again.

In order to facilitate understanding of the embodiments of the present application, the following describes the communication network system on which the mobile terminal of the present application is based.

Please refer to FIG. 2. FIG. 2 is an architecture diagram of a communication network system according to an embodiment of the present application. The communication network system is an LTE system of universal mobile communication technology. The LTE system includes a user device 201, an evolved UMTS terrestrial radio access network (E-UTRAN) 202, an evolved packet core (EPC) 203 and an operator's IP service 204 connected in turn.

In an embodiment, the UE 201 may be the above-mentioned terminal device 100, which will not be repeated here.

The E-UTRAN 202 includes eNodeB 2021 and other eNodeB 2022, etc. In an embodiment, the eNodeB 2021 can be connected to other eNodeB 2022 through a backhaul (eg X2 interface), the eNodeB 2021 is connected to the EPC 203, and the eNodeB 2021 can provide access from the UE 201 to the EPC 203.

The EPC 203 may include a mobility management entity (MME) 2031, a home subscriber server (HSS) 2032, other MME 2033, a serving gate way (SGW) 2034, a PDN gate way (PGW) 2035 and a policy and charging rules function (PCRF) 2036, etc. In an embodiment, the MME 2031 is a control node that handles signaling between the UE 201 and the EPC 203, and provides bearer and connection management. The HSS 2032 is used to provide some registers to manage functions such as the home location register (not shown in the figures), and store some user-specific information about service characteristics, data rates, etc. All user data can be sent through SGW 2034, the PGW 2035 can provide IP address allocation of UE 201 and other functions. The PCRF 2036 is the policy and charging control policy decision point of service data flow and IP bearer resources, which selects and provides available policy and charging control decisions for the policy and charging execution function unit (not shown).

The IP service 204 may include an Internet, an intranet, an IP multimedia subsystem (IMS), or other IP services.

Although the above takes the LTE system as an example, those skilled in the art should know that the present application is not only applicable to the LTE system, but also applicable to other wireless communication systems, such as GSM, CDMA2000, WCDMA, TD-SCDMA and future new network system (such as 5G), etc., which is not limited here.

Based on the above-mentioned mobile terminal hardware structure and communication network system, various embodiments of the present application are proposed.

### First Embodiment

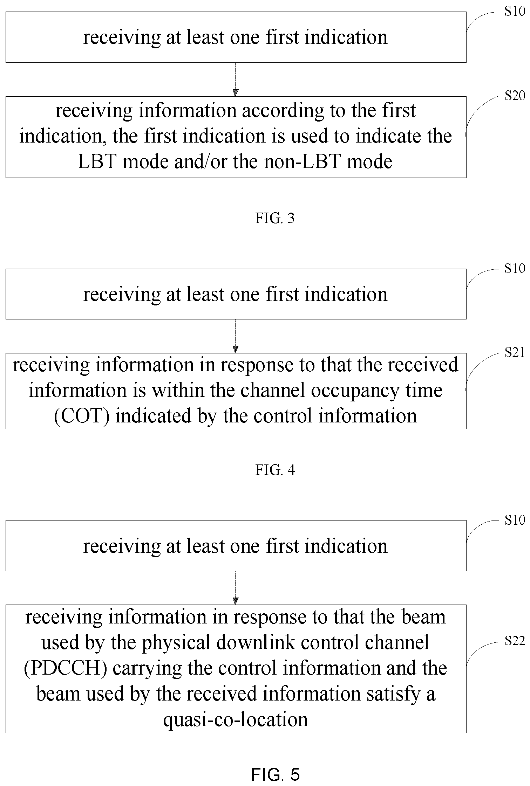

FIG. 3 is a flowchart of a processing method according to an embodiment of the present application. As shown in FIG. 3 , the method may include:
S10: receiving at least one first indication.

In an embodiment, the first indication is carried in at least one radio resource control (RRC) message, and the first indication is used to indicate the LBT mode and/or the non-LBT mode.

In an embodiment, the first indication is used to indicate that the beam operates in the LBT mode and/or the non-LBT mode. For example, the first indication includes multiple mode indications, the first indication indicates that the first beam operates in the LBT mode, and the first indication may further indicate that the second beam operates in the non-LBT mode.

In an embodiment, the LBT mode or the non-LBT mode may be determined directly according to the first indication, the first indication is used to indicate a mode of the link between the base station and the terminal device, and the RRC message may be cell specific or UE specific. It can also be a mode that can be used to indicate the link between the base station and the terminal device in other forms, which is not limited here. The LBT mode indicates that the link between the base station and the terminal device is in the LBT mode. The non-LBT mode indicates that the link between the base station and the terminal device is in the non-LBT mode. Therefore, through the first indication, the terminal device can assume that some signal transmissions in a cell do not require LBT, while other signal transmissions require LBT, so that the terminal device obtains the mode of the link between the base station and the terminal device according to the first indication, determines whether LBT is required to transmit some signals, and selects different judgment methods according to the LBT mode or the non-LBT mode. Compared with using a judgment method to receive information, it is more conducive to increasing the chance of receiving information and/or reducing the probability of false alarms.

In an embodiment, the RRC message at least includes a UE-specific RRC message, a system information message and/or a common RRC message, and the LBT mode and/or the non-LBT mode may be determined directly according to at least one first indication, and the at least one first indication may be carried in UE-specific RRC messages, system information messages and/or common RRC messages, and the LBT mode and/or the non-LBT mode is determined according to the UE-specific RRC messages, system information messages and/or common RRC messages, that is, according to the UE-specific RRC messages, system information messages and/or common RRC messages, device-specific RRC messages, system information messages and/or common RRC messages are analyzed by using preset determination rules to determine the LBT mode and/or the non-LBT mode, to improve the accuracy of the determination of the LBT mode and/or the non-LBT mode.

In an embodiment, in order for the terminal device to determine the mode in which the link between its base station and the terminal device is located, a preset determination rule is used according to at least one of the UE-specific RRC message, the system information message and/or the common RRC message.

In the embodiment, the received information type of the terminal device needs to be pre-configured, and the received information is CSI-RS. The CSI-RS can be periodic CSI-RS or semi-persistent CSI-RS, or can be replaced with aperiodic CSI-RS and/or configured uplink transmission (CG-PUSCH), which is not limited in the embodiment. In the embodiment, the periodic CSI-RS or semi-persistent CSI-RS is used as received information for description, the mode list shown in Table 1 below.

Referring to the table below, the terminal device determines whether the link between the base station and the terminal device is operating in the LBT mode or the non-LBT mode according to different combinations of RRC messages received.

**Table 1**

| | | system information message and/or common RRC message | | |
|---|---|---|---|---|
| | | LBT | Non-LBT | Non-received |
| | LBT | LBT | LBT | LBT |
| | Non-LBT | Non-LBT | Non-LBT | Non-LBT |
| UE-specific RRC message | Non-received | LBT | Non-LBT | LBT |

The UE-specific RRC message includes at least one of the LBT mode, the non-LBT mode, and the non-received mode. The system information message and/or common RRC message includes at least one of the LBT mode, the non-LBT mode, and the non-received mode. In an embodiment, the non-received mode is the non-received mode in the table.

In an embodiment, in response to that the terminal device receives a system information message and/or a common RRC message notifying that the link between the current base station and the terminal device is operating in LBT mode, and the terminal device receives a UE-specific RRC message notifying that the link between the current base station and the terminal device is operating in LBT mode, the terminal device considers that the link between the current base station and the terminal device is operating in LBT mode .

In an embodiment, in response to that the terminal device receives a system information message and/or a common RRC message notifying that the link between the current base station and the terminal device is operating in the LBT mode, and the terminal device receives a UE-specific RRC message notifying that the link between the current base station and the terminal device is operating in the non-LBT mode, the terminal device considers that the link between the current base station and the terminal device is operating in the non-LBT mode.

In an embodiment, in response to that the terminal device receives a system information message and/or a common RRC message notifying that the link between the current base station and the terminal device is operating in LBT mode, and the terminal device does not receive a UE-specific RRC message, the terminal device considers that the link between the current base station and the terminal device is operating in LBT mode.

In an embodiment, in response to that the terminal device receives a system information message and/or a common RRC message notifying that the link between the current base station and the terminal device is operating in non-LBT mode, and the terminal device receives a UE-specific RRC message notifying that the link between the current base station and the terminal device is operating in LBT mode, the terminal device considers that the link between the current base station and the terminal device is operating in LBT mode.

In an embodiment, in response to that the terminal device receives a system information message and/or a common RRC message notifying that the link between the current base station and the terminal device is operating in non-LBT mode, and the terminal device receives a UE-specific RRC message notifying that the link between the current base station and the terminal device is operating in non-LBT mode, the terminal device considers that the link between the current base station and the terminal device is operating in non-LBT mode.

In an embodiment, in response to that the terminal device receives a system information message and/or a common RRC message notifying that the link between the current base station and the terminal device is operating in non-LBT mode, and the terminal device does not receive a UE-specific RRC message, the terminal device considers that the link between the current base station and the terminal device is operating in non-LBT mode.

In an embodiment, in response to that the terminal device does not receive a system information message and/or a common RRC message notifying that the link between the current base station and the terminal device is operating, and the terminal device receives a UE-specific RRC message notifying that the link between the current base station and the terminal device is operating in LBT mode, the terminal device considers that the link between the current base station and the terminal device is operating in LBT mode.

In an embodiment, in response to that the terminal device does not receive a system information message and/or a common RRC message notifying that the link between the current base station and the terminal device is operating, and the terminal device receives a UE-specific RRC message notifying that the link between the current base station and the terminal device is operating in non-LBT mode, the terminal device considers that the link between the current base station and the terminal device is operating in non-LBT mode.

In an embodiment, in response to that the terminal device does not receive a system information message and/or a common RRC message notifying that the link between the current base station and the terminal device is operating, and the terminal device does not receive a UE-specific RRC message, the terminal device considers that the link between the current base station and the terminal device is operating in the LBT mode.

In the embodiment, the LBT mode and/or non-LBT mode are determined based on the UE-specific RRC message, the system information message and/or the common RRC message by using preset determination rules, to improve the accuracy of the determination of the operating mode of the link between the base station and the terminal device.

S20: receiving information according to the first indication, the first indication is used to indicate the LBT mode and/or the non-LBT mode.

In an embodiment, in response to that the first indication is used to indicate the LBT mode, it indicates that it is operating in the unlicensed spectrum, and the information is received by using the judgment reception method for the unlicensed spectrum, and/or, in response to that the first indication is used to indicate the non-LBT mode, it indicates that the base station and the terminal device are operating as if they were in the licensed spectrum, and the information is received by using the judgment reception method for the non-LBT mode. Different judgment methods are used for information reception for whether LBT is required, and the purpose of increasing the chance of receiving CSI-RS and/or reducing the probability of receiving CSI-RS false alarms is achieved.

The processing method provided in an embodiment of the present application receives at least one first indication, receives information according to the first indication, the first indication is used to indicate the LBT mode and/or the non-LBT mode. By the above means, it is determined whether the LBT is required based on the indicated LBT mode and/or non-LBT mode, to increase the chance of receiving CSI-RS and/or reduce the probability of receiving CSI-RS false alarms.

### Second Embodiment

FIG. 4 is a flowchart of the processing method according to a second embodiment of the present application, as shown in FIG. 4, the first indication includes a LBT mode, the S20 includes:
receiving information according to the first indication in response to that the received information satisfies a preset condition.

In an embodiment, the link between the base station and the terminal device is operating in LBT mode based on the system information message and/or common RRC message and/or UE-specific RRC message received by the terminal system. The preset condition includes at least one of the following:
S21: receiving information in response to that the received information is within the channel occupancy time (COT) indicated by the control information.

In an embodiment, the control information indicates COT in response to that at least one control information is received and the received information is within the COT, in response to that no control information is received, or in response to that the control information is received but the control information does not indicate COT and the received information is within the aperiodic CSI-RS or the dynamically scheduled physical downlink shared channel (PDSCH), the information is received. The control information may be transmission configuration index (TCI)(DCI) format 2-0, and may also be other forms of control information, which are not limited by the embodiment. In the embodiment, the control information being DCI 2-0 control information is taken as an example.

If the terminal device receives a DCI 2-0, it indicates a COT to the terminal device and the periodic CSI-RS or semi-persistent CSI-RS is within the COT, the terminal device receives the periodic CSI-RS or semi-persistent CSI-RS. If the terminal device does not receive a DCI 2-0, or receives a DCI 2-0 but the DCI 2-0 does not indicate a COT, and if the periodic CSI-RS or semi-persistent CSI-RS is within the aperiodic CSI-RS or the dynamically scheduled PDSCH, the terminal device receives the periodic CSI-RS or semi-persistent CSI-RS; otherwise, the terminal device does not receive the periodic CSI-RS or semi-persistent CSI-RS.

In an embodiment, in response to that the first indication includes a LBT mode, and a control information is received, the control information indicates the COT and it is determined that the received information is within the COT, or that no control information is received, or that the control information is received but the control information does not indicate the COT and the received information is within the aperiodic CSI-RS or the dynamically scheduled PDSCH, then it is determined to receive information, to determine whether to receive the information based on whether the first indication includes the LBT mode and whether the control information is received. Compared to using only one judgment method, the embodiment can determine whether to receive the information by using different judgment methods based on the specific situation, to increase the chance of receiving the information and improve the performance of the system processing.

In an embodiment, in order to determine whether the received information is within the COT, the control information DCI 2-0 may also indicate the remaining time of the COT by a bit field, the received information is within the remaining time of the COT indicated by the control information, it is determined that the received information is within the COT, and vice versa, the received information is outside the COT, for example, DCI 2-0 indicates the remaining time of the COT by a bit field, the periodic CSI-RS or semi-persistent CSI-RS occurs within the remaining time of the COT, then the periodic CSI-RS or semi-persistent CSI-RS is considered to fall within the COT; otherwise, the periodic CSI-RS or semi-persistent CSI-RS is considered to fall outside the COT, thus it is determined whether the received information is within the COT to determine the mode of the terminal device.

### Third Embodiment

FIG. 5 is a flowchart of the processing method according to a third embodiment of the present application, as shown in FIG. 5, the S20 includes:
S22: receiving information in response to that the beam used by the physical downlink control channel (PDCCH) carrying the control information and the beam used by the received information satisfy a quasi-co-location.

In an embodiment, in order to determine whether to receive the information according to the first indication, in response to that the control information is received, and the beam used by the PDCCH carrying the control information and the beam used by the received information satisfy quasi-co-location (QCL), the information is received, or in response to that the control information is not received, or the control information is received but the control information does not indicate COT, the aperiodic CSI-RS, or the dynamically scheduled PDSCH, or associated PDCCH, satisfies quasi-co-location with the received information, then the information is received; otherwise, the terminal device does not receive the periodic or semi-persistent CSI-RS.

For example, if the terminal device receives DCI 2-0, a COT is indicated to the terminal device, and the periodic CSI-RS or semi-persistent CSI-RS is within the COT, and at least one of the PDCCH carrying the DCI 2-0 and the periodic CSI-RS or semi-persistent CSI-RS satisfies the QCL, the terminal device receives the periodic CSI-RS or semi-persistent CSI-RS. If the terminal device does not receive DCI 2-0, or receives DCI 2-0 but DCI 2-0 does not indicate the COT, if the periodic CSI-RS or semi-persistent CSI-RS is within the aperiodic CSI-RS or dynamically scheduled PDSCH and at least one of the aperiodic CSI-RS or PDSCH or associated PDCCH and the periodic CSI-RS or semi-persistent CSI-RS satisfies the QCL, the terminal device receives the periodic CSI-RS or semi-persistent CSI-RS; otherwise, the terminal device does not receive the periodic CSI-RS or semi-persistent CSI-RS.

In an embodiment, in order to determine that the aperiodic CSI-RS, or the dynamically scheduled PDSCH, or associated PDCCH, is quasi-co-location with the received information, i.e., whether the received information is within the aperiodic CSI-RS, or the dynamically scheduled PDSCH, or associated PDCCH is determined by whether the resources occupied by the received information in the time domain overlap and/or are adjacent to resources occupied by the aperiodic CSI-RS or the dynamically scheduled PDSCH. In response to that the resources occupied by the received information in the time domain overlap and/or are adjacent to resources occupied by the aperiodic CSI-RS or the dynamically scheduled PDSCH, it is determined that the received information is within the aperiodic CSI-RS, or the dynamically scheduled PDSCH, or associated PDCCH, such that the resources occupied by the periodic CSI-RS or semi-persistent CSI-RS overlap and/or are adjacent in the time domain to the resources occupied by the aperiodic CSI-RS or the dynamically scheduled PDSCH, then it is determined that the periodic CSI-RS or semi-persistent CSI-RS is within the aperiodic CSI-RS or the dynamically scheduled PDSCH.

In an embodiment, the state of the QCL is QCL typeD, the QCL is that the large-scale parameters of the channel experienced by a symbol on one antenna port can be inferred from the channel experienced by a symbol on another antenna port, and the large-scale parameters can be a delay spread, an average delay, a doppler spread, a doppler shift, an average gain, and the spatial RX parameter, etc.

In an embodiment, the spatial RX parameter can be at least one of the parameters such as channel correlation matrix, transmitting beam, receiving beam, transmitting/receiving beam pair, etc. The spatial RX parameter is used to define the difference in the large-scale parameters of the channel due to the variation of the analog beamforming. If two antenna ports are QCL under spatial RX parameter, i.e., the same beam can be used to receive two ports or to transmit two ports or to receive and transmit two ports separately. The QCL typeD means that two antenna ports have the same spatial RX parameter.

In the embodiment, in response to that the first indication includes the LBT mode, in order to determine whether to receive the information, it is determined that whether the beam used by the PDCCH carrying the control information and the beam used by the received information satisfy the quasi-co-location, the information may be received in response to that the beam used by the PDCCH carrying the control information and the beam used by the received information satisfy the quasi-co-location, such determination can be further performed through the beam used by the PDCCH on the basis that the received information is within the COT indicated by the control information where the received information is located, the accuracy of the determination of the LBT mode of the terminal device.

### Fourth Embodiment

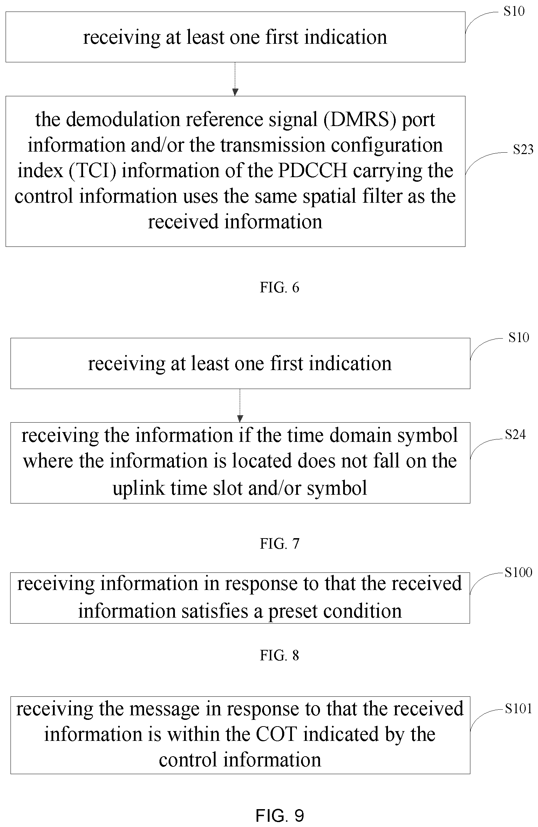

FIG. 6 is a flowchart of the processing method according to a fourth embodiment of the present application, as shown in FIG. 6, the S22 includes:
S23, the demodulation reference signal (DMRS) port information and/or the transmission configuration indication (TCI) information of the PDCCH carrying the control information uses the same spatial filter as the received information.

If the DMRS port information and/or the TCI information of the PDCCH carrying the control information uses the same spatial filter as the received information, it is determined that the beam used by the PDCCH carrying the control information and the beam used by the received information satisfy quasi-co-location, i.e. the beam used by the PDCCH carrying the control information covers at least one of the beams used by the received information.

In the embodiment, if the terminal device receives DCI 2-0, the COT is indicated to the terminal device, and the periodic CSI-RS or semi-persistent CSI-RS is within the COT, and the beam used by the PDCCH carrying the DCI 2-0 covers at least one of the beams used by the periodic CSI-RS or semi-persistent CSI-RS, the terminal device receives the periodic CSI-RS or semi-persistent CSI-RS. If the terminal device does not receive DCI 2-0, or receives DCI 2-0 but DCI 2-0 does not indicate the COT, if the periodic CSI-RS or semi-persistent CSI-RS is within the aperiodic CSI-RS or the dynamically scheduled PDSCH and the beam used by the aperiodic CSI-RS or PDSCH or associated PDCCH covers at least one of the beams used by the periodic CSI-RS or the semi-persistent CSI-RS, the terminal device receives the periodic CSI-RS or the semi-persistent CSI-RS; otherwise, the terminal device does not receive the periodic CSI-RS or the semi-persistent CSI-RS.

In an embodiment, the terminal device determines whether the beam used by the periodic CSI-RS or semi-persistent CSI-RS is within the coverage of the beam of the PDCCH carrying the DCI 2-0 based on whether the DMRS port information of the PDCCH carrying the DCI 2-0 and the periodic CSI-RS or semi-persistent CSI-RS use the same spatial filter.

In an embodiment, the terminal device determines whether the same spatial filter is used based on comparing the TCI information of the PDCCH carrying the DCI 2-0 with the periodic CSI-RS or semi-persistent CSI-RS, i.e. whether the beam used by the periodic CSI-RS or semi-persistent CSI-RS is within the coverage of the beam of the PDCCH carrying the DCI 2-0.

In an embodiment, if the periodic CSI-RS or semi-persistent CSI-RS and the PDCCH carrying the DCI 2-0 use the same spatial filter, the beam used by the second control channel is considered to be within the coverage of the beam of the first control channel; if the periodic CSI-RS or semi-persistent CSI-RS and the PDCCH carrying the DCI 2-0 use different spatial filters, it is considered that the periodic CSI-RS or semi-persistent CSI-RS uses a beam that is outside the coverage of the beam of the PDCCH carrying the DCI 2-0, thereby employing DMRS port information and/or TCI information to determine that the beam used by the PDCCH carrying the control information and the beam used by the received information satisfy quasi-co-location, the accuracy of system processing is improved.

In an embodiment, the beam used by the PDCCH is determined by the beam used by the associated reference signal, which may be a synchronization signal block (SSB) or CSI-RS, and may also be other reference signals, without limitation in the embodiment. The beam used by the PDCCH may be determined by the associated reference signal, the SSB or the beam used by CSI-RS. For a particular downlink transmission, the PDCCH or PDSCH uses the same beam as the reference signal associated with the TCI, or a spatial filter.

In an embodiment, each TCI information includes a reference signal and/or at least one QCL state.

The reference signal includes at least an SSB or CSI-RS, for example each TCI includes a reference signal, an SSB or CSI-RS, at least one QCL state, QCL type A, QCL type B, QCL type C, and QCL type D, the terminal device is informed by associating the TCI with a particular downlink transmission PDCCH or PDSCH that the downlink transmission uses the same beam or a spatial filter as the reference signal associated with the TCI.

In the embodiment, the DMRS port information and/or TCI information of the PDCCH carrying the control information uses the same spatial filter as the received information, it is determined that the beam used by the PDCCH carrying the control information and the beam used by the received information satisfy quasi-co-location, and thus the terminal device LBT mode is determined based on the DMRS port information and/or TCI information, the accuracy of determination of the LBT mode of the terminal device is improved.

### Fifth Embodiment

FIG. 7 is a flowchart of the processing method according to a fifth embodiment of the present application, as shown in FIG. 7, the first indication includes non-LBT mode, the S20 includes:
S24, receiving the information if the time domain symbol where the information is located does not fall on the uplink slot and/or symbol.

It should be noted that if the terminal device determines that the link between the base station and the terminal device is operating in non-LBT mode based on the received system information message and/or the common RRC message and/or the UE-specific RRC message, the terminal device receives the semi-persistent CSI-RS or periodic CSI-RS at the corresponding location in response to that the semi-persistent CSI-RS or periodic CSI-RS does not fall on the uplink slot or symbol. Otherwise, the terminal device does not receive the semi-persistent CSI-RS or periodic CSI-RS, so that the judgment of the non-LBT mode of the terminal device is made according to the time domain symbol where the received information is located, and the accuracy of the determination of the non-LBT mode of the terminal device is improved.

### Sixth Embodiment

FIG. 8 is a flowchart of the processing method according to a sixth embodiment of the present application, as shown in FIG. 8, which may include: S100: receiving information in response that the received information satisfies a preset condition.

In the embodiment, it is necessary to pre-configure the type of received information for the terminal device, and the received information is CSI-RS, and the CSI-RS may be periodic CSI-RS or semi-persistent CSI-RS, or replaced with aperiodic CSI-RS and/or CG-PUSCH, which is not limited herein. In the embodiment, the periodic CSI-RS or semi-persistent CSI-RS is described for the received information.

In an embodiment, the received information includes: receiving a message according to the first indication, the first indication is used to indicate the LBT mode and/or the non-LBT mode, the first indication is carried in at least one RRC message.

In the embodiment, the LBT mode or the non-LBT mode may be determined directly based on the first indication, the first indication is used to indicate the mode of the link between the base station and the terminal device, the RRC message is either cell specific or UE specific, or may be otherwise usable to indicate that the terminal device assumes that the link between the base station and the terminal device is in the LBT mode, and non-LBT mode indicates that the terminal device assumes that the link between the base station and the terminal device is in the non-LBT mode, so that the first indication can determines that some signals within a cell are transmitted without LBT, while others signal transmission requires LBT, the mode of the link between the base station of the terminal device and the terminal device is obtained according to the first indication, whether LBT is required is determined, and different judgment methods for information reception are selected according to the LBT mode or non-LBT mode, which is more conducive to increasing the chance of receiving information and/or reducing the probability of receiving false alarms.

In an embodiment, the RRC message at least includes a UE-specific RRC message, a system information message and/or a common RRC message. The LBT mode and/or non-LBT mode may be determined directly according to at least one first indication. The at least one first indication may be carried in the UE-specific RRC message, and the system information message and/or the common RRC message. The LBT mode and/or non-LBT mode is determined according to the UE-specific RRC message, the system information message and/or the common RRC message, i.e. the LBT mode and/or non-LBT mode is determined by using preset determination rules according to the UE-specific RRC message, the system information message and/or the common RRC message, to improve the accuracy of determination of the LBT mode and/or non-LBT mode.

In an embodiment, in order to determine the mode where the link between the base station and the terminal device is located, the LBT mode and/or non-LBT mode is determined by using a combined analysis of the preset determination rules according to at least one of the UE-specific RRC messages, the system information messages, and/or the common RRC messages.

In the embodiment, referring to Table 1 above, the terminal device determines whether the link between the base station and the terminal device is operating in LBT mode or non-LBT mode based on the different combinations of RRC messages received.

The UE-specific RRC messages include at least one of the LBT mode, the non-LBT mode, and the non-received mode. The system information messages and/or common RRC messages include at least one of the LBT mode, the non-LBT mode, and the non-received mode. In an embodiment, the non-received mode is the non-received mode in the table.

In an embodiment, in response to that the terminal device receives the system information message and/or the common RRC message notifying that the link between the current base station and the terminal device is operating in the LBT mode, and the terminal device receives the UE-specific RRC message notifying that the link between the current base station and the terminal device is operating in the LBT mode, the terminal device considers that the link between the current base station and the terminal device is operating in the LBT mode .

In an embodiment, in response to that the terminal device receives the system information message and/or the common RRC message notifying that the link between the current base station and the terminal device is operating in the LBT mode, and the terminal device receives the UE-specific RRC message notifying that the link between the current base station and the terminal device is operating in the non-LBT mode, the terminal device considers that the link between the current base station and the terminal device is operating in the non-LBT mode.

In an embodiment, in response to that the terminal device receives the system information message and/or the common RRC message notifying that the link between the current base station and the terminal device is operating in LBT mode, and the terminal device does not receive the UE-specific RRC message, the terminal device considers that the link between the current base station and the terminal device is operating in LBT mode.

In an embodiment, in response to that the terminal device receives the system information message and/or the common RRC message notifying that the link between the current base station and the terminal device is operating in non-LBT mode, and the terminal device receives the UE-specific RRC message notifying that the link between the current base station and the terminal device is operating in LBT mode, the terminal device considers that the link between the current base station and the terminal device is operating in LBT mode.

In an embodiment, in response to that the terminal device receives the system information message and/or the common RRC message notifying that the link between the current base station and the terminal device is operating in non-LBT mode, and the terminal device receives the UE-specific RRC message notifying that the link between the current base station and the terminal device is operating in non-LBT mode, the terminal device considers that the link between the current base station and the terminal device is operating in non-LBT mode.

In an embodiment, in response to that the terminal device receives the system information message and/or the common RRC message notifying that the link between the current base station and the terminal device is operating in non-LBT mode, and the terminal device doesn't receive the UE-specific RRC message, the terminal device considers that the link between the current base station and the terminal device is operating in non-LBT mode.

In an embodiment, in response to that the terminal device does not receive the system information message and/or the common RRC message notifying that the link between the current base station and the terminal device is operating, and the terminal device receives the UE-specific RRC message notifying that the link between the current base station and the terminal device is operating in LBT mode, the terminal device considers that the link between the current base station and the terminal device is operating in the LBT mode.

In an embodiment, in response to that the terminal device does not receive the system information message and/or the common RRC message notifying that the link between the current base station and the terminal device is operating, and the terminal device receives the UE-specific RRC message notifying that the link between the current base station and the terminal device is operating in non-LBT mode, the terminal device considers that the link between the current base station and the terminal device is operating in the non-LBT mode.

In an embodiment, in response to that the terminal device does not receive the system information message and/or the common RRC message notifying that the link between the current base station and the terminal device is operating, and the terminal device does not receive a UE-specific RRC message, the terminal device considers that the link between the current base station and the terminal device is operating in the LBT mode.

The embodiment determines the LBT mode and/or non-LBT mode by using preset determination rules based on UE-specific RRC messages, system information messages and/or common RRC messages, to improve the accuracy of the determination of the operating mode of the link between the base station and the terminal device.

In the embodiment, in response to that the first indication is used to indicate the LBT mode, it indicates that it is operating in the unlicensed spectrum, and the information is received by using the judgment reception method for the unlicensed spectrum, and/or, in response to that the first indication is used to indicate the non-LBT mode, it indicates that the base station and the terminal device are operating as if they are in the licensed spectrum, and the information is received by using the judgment reception method for the non-LBT mode reception, so that different judgment methods for information reception are used for whether LBT is required or not, to increase the chance of receiving CSI-RS and/or reduce the probability of receiving CSI-RS false alarms.

### Seventh embodiment

FIG. 9 is a flowchart of the processing method according to a seventh embodiment of the present application, as shown in FIG. 9, the first indication includes a LBT mode, the S100 includes:
S101: receiving the information in response to that the received information is within the COT indicated by the control information.

In the embodiment, in response to that at least one control information is received, the control information indicates COT and the received information is within the COT, in response to that no control information is received, or in response to that the control information is received but the control information does not indicate COT and the received information is within the aperiodic CSI-RS or dynamically scheduled PDSCH, the control information may be in DCI format 2-0 or in other forms, which are not limited herein. In the embodiment, the control information is illustrated as a DCI 2-0 control information.

If the terminal device receives a DCI 2-0, a COT is indicated to the terminal device, the periodic CSI-RS or semi-persistent CSI-RS is within the COT, the terminal device receives the periodic CSI-RS or semi-persistent CSI-RS. If the terminal device does not receive a DCI 2-0, or receives a DCI 2-0 but the DCI 2-0 does not indicate a COT, and if the periodic CSI-RS or semi-persistent CSI-RS is within the aperiodic CSI-RS or the dynamically scheduled PDSCH, the terminal device receives the periodic CSI-RS or semi-persistent CSI-RS; otherwise, the terminal device does not receive the periodic CSI-RS or semi-persistent CSI-RS.

In the embodiment, in response to that the first indication includes a LBT mode, and the control information is received, the control information indicates the COT and it is determined that the received information is within the COT, or no control information is received, or the control information is received but the control information does not indicate the COT and the received information is within the aperiodic CSI-RS or the dynamically scheduled PDSCH, then it is determined to receive the information, thereby determining whether to receive the information based on whether the first indication includes the LBT mode and whether to receive the control information. Compared to using only one judgment method, the embodiment can determine whether to receive the information by using different judgment methods depending on the specific situation, to increase the chance of receiving information and improve the performance of system processing.

In an embodiment, in order to determine whether the received information is within the COT, the control information DCI 2-0 may also indicate the remaining time of the COT by a bit field, the received information is within the remaining time of the COT indicated by the control information, it is determined that the received information is within the COT, and vice versa, the received information is outside the COT, for example, DCI 2-0 indicates the remaining time of the COT by a bit field, the periodic CSI-RS or semi-persistent CSI-RS occurs within the remaining time of the COT, then the periodic CSI-RS or semi-persistent CSI-RS is considered to fall within the COT; otherwise, the periodic CSI-RS or semi-persistent CSI-RS is considered to fall outside the COT, to determine whether the received information is within the COT and the terminal device mode.

### Eighth Embodiment

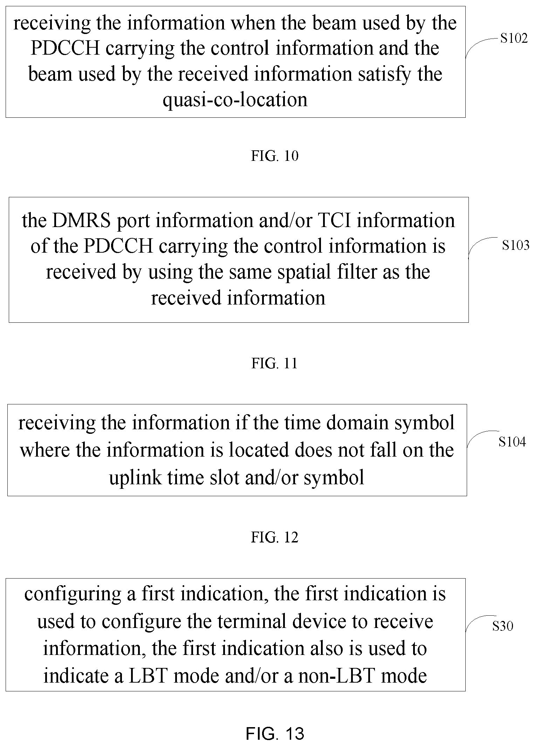

FIG. 10 is a flowchart of the processing method according to an eighth embodiment of the present application, as shown in FIG. 10, the S100 includes: S102: receiving the information in response to that the beam used by the PDCCH carrying the control information and the beam used by the received information satisfy the quasi-co-location.

In an embodiment, in order to determine whether to receive the information according to the first indication, in response to that the control information is received, and the beam used by the PDCCH carrying the control information and the beam used by the received information satisfy quasi-co-location (QCL), the information is received. Or in response to that the control information is not received, or the control information is received but the control information does not indicate COT, the aperiodic CSI-RS, or the dynamically scheduled PDSCH, or associated PDCCH, satisfies quasi-co-location with the received information, then the information is received, and vice versa.

For example, if the terminal device receives DCI 2-0, a COT is indicated to the terminal device, and the periodic CSI-RS or semi-persistent CSI-RS is within the COT, and at least one of the PDCCH carrying the DCI 2-0 and the periodic CSI-RS or semi-persistent CSI-RS satisfies the QCL, the terminal device receives the periodic CSI-RS or semi-persistent CSI-RS. If the terminal device does not receive DCI 2-0, or receives DCI 2-0 but DCI 2-0 does not indicate a COT, if the periodic CSI-RS or semi-persistent CSI-RS is within the aperiodic CSI-RS or dynamically scheduled PDSCH and at least one of the aperiodic CSI-RS or PDSCH or associated PDCCH and the periodic CSI-RS or semi-persistent CSI-RS satisfies the QCL, the terminal device receives the periodic CSI-RS or semi-persistent CSI-RS; otherwise, the terminal device does not receive the periodic CSI-RS or semi-persistent CSI-RS.

In an embodiment, in order to determine that the aperiodic CSI-RS, or the dynamically scheduled PDSCH, or associated PDCCH, is quasi-co-located with the received information, i.e., whether the received information is within the aperiodic CSI-RS, or the dynamically scheduled PDSCH, or associated PDCCH is determined by whether the resources occupied by the received information in the time domain overlap and/or are adjacent to resources occupied by the aperiodic CSI-RS or the dynamically scheduled PDSCH. in response to that the resources occupied by the received information in the time domain overlap and/or are adjacent to resources occupied by the aperiodic CSI-RS or the dynamically scheduled PDSCH, it is determined that the received information is within the aperiodic CSI-RS, or the dynamically scheduled PDSCH, or associated PDCCH, such that the resources occupied by the periodic CSI-RS or semi-persistent CSI-RS overlap and/or are adjacent in the time domain to the resources occupied by the aperiodic CSI-RS or the dynamically scheduled PDSCH, then it is determined that the periodic CSI-RS or semi-persistent CSI-RS is within the aperiodic CSI-RS or the dynamically scheduled PDSCH.

In an embodiment, the state of the QCL is QCL typeD, the QCL is that the large-scale parameters of the channel experienced by a symbol on one antenna port can be inferred from the channel experienced by a symbol on another antenna port, and the large-scale parameters can be a delay spread, an average delay, a doppler spread, a doppler shift, an average gain, and the spatial RX parameter, etc.

In an embodiment, the spatial RX parameter can be at least one of the parameters such as channel correlation matrix, transmitting beam, receiving beam, transmitting/receiving beam pair, etc. The spatial RX parameter is used to define the difference in the large-scale parameters of the channel due to the variation of the analog beamforming. If two antenna ports are QCL under spatial RX parameter, i.e., the same beam can be used to receive two ports or to transmit two ports or to receive and transmit two ports separately. The QCL typeD means that two antenna ports have the same spatial RX parameter.

In the embodiment, in response to that the first indication includes the LBT mode, in order to determine whether to receive the information, it is determined that whether the beam used by the PDCCH carrying the control information and the beam used by the received information satisfy the quasi-co-location, the information may be received in response to that the beam used by the PDCCH carrying the control information and the beam used by the received information satisfy the quasi-co-location, such determination can be further performed through the beam used by the PDCCH on the basis that the received information falling within the COT indicated by the control information where the received information is located, the accuracy of the determination of the LBT mode of the terminal device.

### Ninth embodiment

FIG. 11 is a flowchart of the processing method according to a ninth embodiment of the present application, as shown in FIG. 11, the S100 includes: S103, the DMRS port information and/or TCI information of the PDCCH carrying the control information is received by using the same spatial filter as the received information.

If the DMRS port information and/or the TCI information of the PDCCH carrying the control information uses the same spatial filter as the received information, it is determined that the beam used by the PDCCH carrying the control information and the beam used by the received information satisfy quasi-co-location, i.e. the beam used by the PDCCH carrying the control information covers at least one of the beams used by the received information.

In the embodiment, if the terminal device receives DCI 2-0, a COT is indicated to the terminal device, and the periodic CSI-RS or semi-persistent CSI-RS is within the COT, and the beam used by the PDCCH carrying the DCI 2-0 covers at least one of the beams used by the periodic CSI-RS or semi-persistent CSI-RS, the terminal device receives the periodic CSI-RS or semi-persistent CSI-RS. If the terminal device does not receive DCI 2-0 or receives DCI 2-0 but DCI 2-0 does not indicate a COT, if the periodic CSI-RS or semi-persistent CSI-RS is within the aperiodic CSI-RS or dynamically scheduled PDSCH and the beam used by the aperiodic CSI-RS or PDSCH or associated PDCCH covers at least one of the beams used by the periodic CSI-RS or semi-persistent CSI-RS, the terminal device receives the periodic CSI-RS or semi-persistent CSI-RS; otherwise, the terminal device does not receive the periodic CSI-RS or semi-persistent CSI-RS.

In an embodiment, the terminal device determines whether the beam used by the periodic CSI-RS or semi-persistent CSI-RS is within the coverage of the beam of the PDCCH carrying the DCI 2-0 based on whether the DMRS port information of the PDCCH carrying the DCI 2-0 and the periodic CSI-RS or semi-persistent CSI-RS use the same spatial filter.

In an embodiment, the terminal device determines whether the same spatial filter is used based on comparing the TCI information of the PDCCH carrying the DCI 2-0 with the periodic CSI-RS or semi-persistent CSI-RS, i.e. whether the beam used by the periodic CSI-RS or semi-persistent CSI-RS is within the coverage of the beam of the PDCCH carrying the DCI 2-0.

In an embodiment, if the periodic CSI-RS or semi-persistent CSI-RS and the PDCCH carrying the DCI 2-0 use the same spatial filter, the beam used by the second control channel is considered to be within the coverage of the beam of the first control channel; if the periodic CSI-RS or semi-persistent CSI-RS and the PDCCH carrying the DCI 2-0 use different spatial filters, it is considered that the periodic CSI-RS or semi-persistent CSI-RS uses a beam that is outside the coverage of the beam of the PDCCH carrying the DCI 2-0, thereby employing DMRS port information and/or TCI information to determine that the beam used by the PDCCH carrying the control information and the beam used by the received information satisfy quasi-co-location, the accuracy of system processing is improved.

In an embodiment, the beam used by the PDCCH is determined by the beam used by the associated reference signal, which may be a synchronization signal block (SSB) or CSI-RS, and may also be other reference signals, without limitation in the embodiment. The beam used by the PDCCH may be determined by the associated reference signal, the SSB or the beam used by CSI-RS. For a particular downlink transmission, the PDCCH or PDSCH uses the same beam as the reference signal associated with the TCI, or a spatial filter.

In an embodiment, each TCI information includes a reference signal and/or at least one QCL state.

The reference signal includes at least an SSB or CSI-RS, for example each TCI includes a reference signal, an SSB or CSI-RS, at least one QCL state, QCL type A, QCL type B, QCL type C, and QCL type D, the terminal device is informed by associating the TCI with a particular downlink transmission PDCCH or PDSCH that the downlink transmission uses the same beam or a spatial filter as the reference signal associated with the TCI.

In the embodiment, by the DMRS port information and/or TCI information of the PDCCH carrying the control information using the same spatial filter as the received information, it is determined that the beam used by the PDCCH carrying the control information and the beam used by the received information satisfy quasi-co-location, and thus the terminal device LBT mode is determined based on the DMRS port information and/or TCI information, the accuracy of determination of the LBT mode of the terminal device is improved.

### Tenth embodiment

FIG. 12 is a flowchart of the processing method according to a tenth embodiment of the present application, as shown in FIG. 12, the first indication includes non-LBT mode, the S100 includes:
S104, receiving the information if the time domain symbol where the information is located does not fall on the uplink slot and/or symbol.

It should be noted that if the terminal device determines that the link between the base station and the terminal device is operating in non-LBT mode based on the received system information message and/or the common RRC message and/or the UE-specific RRC message, the terminal device receives the semi-persistent CSI-RS or periodic CSI-RS at the corresponding location in response to that the semi-persistent CSI-RS or periodic CSI-RS does not fall on the uplink slot or symbol. Otherwise, the terminal device does not receive the semi-persistent CSI-RS or periodic CSI-RS, so that the judgment of the non-LBT mode of the terminal device is made according to the time domain symbol where the received information is located, and the accuracy of the determination of the non-LBT mode of the terminal device is improved.

### Eleventh Embodiment

FIG. 13 is a flowchart of the processing method according to an eleventh embodiment of the present application, as shown in FIG. 13, which may include:
S30: configuring a first indication, the first indication is used to configure the terminal device to receive information, the first indication also is used to indicate a LBT mode and/or a non-LBT mode.

It should be noted that the executive subject of the embodiment is a network device, and the network device may be a device with communication functions such as a base station or a server, or other forms of network devices, which are not limited herein. In this embodiment, the network device is a base station as an example.

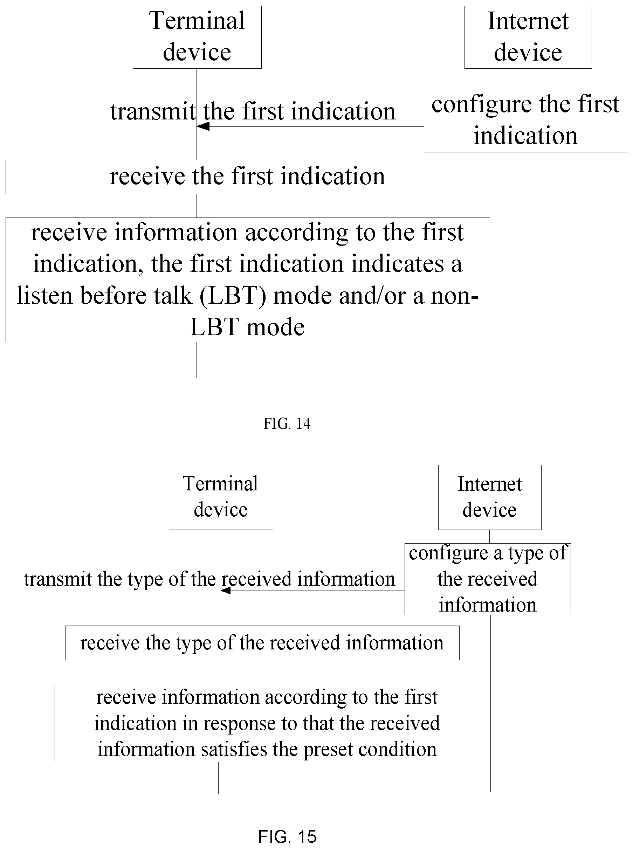

The first indication is carried in at least one RRC message. The first indication is used to indicate LBT mode and/or non-LBT mode. The LBT mode indicates that the link between the base station and the terminal device is in LBT mode, and the non-LBT mode indicates that the link between the base station and the terminal device is in non-LBT mode, so that the first indication can determine that some signal transmissions within a cell are transmitted without LBT, while other signal transmissions require LBT, so that the terminal device is notified of the mode of the link between the base station and the terminal device according to the configuration of the first indication, to determine whether LBT is required, so that through the configuration of the first indication to notify the terminal device, the terminal device can determine the LBT mode and/or the non-LBT according to the first indication mode, to complete the reception of the message, as shown in the interaction schematic of configuring the first indication in FIG. 14.

In an embodiment, the first indication is carried in at least one RRC message, the first indication is used to indicate configuring the terminal device to receive the information, the resource location for receiving the information transmission is configured to the terminal device by the RRC message. The resource location includes at least one of the time domain location, the frequency domain location, and the code domain location.

In the embodiment, it is necessary to pre-configure the type of received information for the terminal device, the received information is CSI-RS, CSI-RS is either the periodic CSI-RS or semi-persistent CSI-RS, or placed with the aperiodic CSI-RS and/or configured grant-PUSCH (CG-PUSCH), which is not limited herein. In the embodiment, the periodic CSI-RS or semi-persistent CSI-RS is illustrated as the received information, as illustrated in the interaction diagram of the configuring the type of received information shown in FIG. 15.

In an embodiment, the terminal device is configured that the link to the terminal device is operating in the LBT mode or the non-LBT mode via the system information message and/or the common RRC message and/or the UE-specific RRC message, the UE-specific RRC message includes at least one of the LBT mode, the non-LBT mode, and non-received mode. The system information message and/or the common RRC message includes at least one of the LBT mode, the non-LBT mode, and the non-received mode, so that the terminal device determines the LBT mode and/or non-LBT mode by using a combined analysis of preset determination rules based on at least one of the UE-specific RRC message, the system information message, and/or the common RRC message.

In the embodiment, the network device configures a resource location for the terminal device for periodic CSI-RS or semi-persistent CSI-RS transmissions by the RRC message. In an embodiment, the resource location includes at least one of a time domain location, a frequency domain location, and a code domain location, and also configures for the terminal device by the system information message and/or the common RRC message and/or the UE-specific RRC message that the link between the current base station and terminal device is operating in LBT mode or non-LBT mode, the link between the base station and the terminal device is the physical channel\signal transmitted between the base station and the terminal device, to configure the first indication and the received information, so that the terminal device can determine the LBT mode and/or the non-LBT mode according to the first indication and use a different way according to the received information to make a decision whether to receive, to increase the chance of receiving CSI-RS and/or reduce the probability of receiving CSI-RS false alarms as compared to using one judgement method.

Embodiments of the present application also provide a processing method, which can be applied to a terminal device (e.g., a cell phone, etc.), including:
S10: receiving at least one first indication.
S20: receiving information according to the first indication, the first indication indicating a listen before talk (LBT) mode and/or a non-LBT mode.

In an embodiment, the first indication is carried in at least one RRC message.

In an embodiment, the method further includes at least one of:
the RRC message including at least one of a UE-specific RRC message, a system information message and/or a common RRC message;
the UE-specific RRC message including at least one of: the LBT mode, the non-LBT mode, and a non-received mode; and
the system information message and/or the common RRC message including at least one of: the LBT mode, the non-LBT mode, and the non-received mode.

In an embodiment, the method further including:
determining the LBT mode and/or the non-LBT mode by a combined analysis of preset determination rules based on at least one of the UE-specific RRC message, the system information message and/or the common RRC message.

In an embodiment, the first indication includes a LBT mode, the S20 including:
receiving information according to the first indication in response to that received information satisfies the preset condition.

In an embodiment, the preset condition includes at least one of:
the received information being within a channel occupancy time (COT) indicated by control information;
the received information being within remaining time of the COT indicated by the control information;
a beam used by a physical downlink control channel (PDCCH), which carries the control information, satisfying quasi-co-location (QCL) with a beam used by the received information; and
demodulation reference signal (DMRS) port information and/or transmission configuration indication (TCI) information of the PDCCH, which carries the control information, using the same spatial filter as the received information.

In an embodiment, the method further including at least one of the following:
the received information being a channel state information-reference signal (CSI-RS);
the received information being a periodic CSI-RS or a semi-persistent CSI-RS;
the control information being DCI 2-0;
a state of the QCL being QCL typeD;
each TCI including a reference signal and/or at least one state of the QCL;
the beam used by the PDCCH being determined by the beam used by an associated reference signal;
the reference signal including at least a synchronization signal block (SSB) or the CSI-RS.

In an embodiment, the preset condition includes at least one of the following:
no control information being received, or the control information being received but not indicating the COT and the received information being within an aperiodic CSI-RS or a dynamically scheduled physical downlink shared channel (PDSCH);
the aperiodic CSI-RS, or the dynamically scheduled PDSCH, or associated PDCCH, satisfying quasi-co-location with the received information;
resources occupied by the received information overlapping and/or being adjacent to resources occupied by the aperiodic CSI-RS or the dynamically scheduled PDSCH in the time domain.

In an embodiment, the first indication includes a non-LBT mode, the S20 including:
receiving information in response to that a time domain symbol where the received information is located doesn't fall on an uplink slot and/or symbol.

Embodiments of the present application further provide a processing method, which may be applied to a terminal device (e.g., a cell phone, etc.), including:
receiving information in response to the received information satisfying the preset condition.

In an embodiment, the received information includes: receiving the information according to a first indication.

In an embodiment, the method further including: at least one of:
the first indication indicating a LBT mode and/or a non-LBT mode.
the first indication being carried in at least one RRC message.

In an embodiment, the method further includes at least one of.
the RRC message including at least one of a UE-specific RRC message, a system information message and/or a common RRC message;
the UE-specific RRC message including at least one of the LBT mode, the non-LBT mode, and a non-received mode;
the system information message and/or common RRC message including at least one of the LBT mode, the non-LBT mode, and the non-received mode.

In an embodiment, the method further including:
determining the LBT mode and/or the non-LBT mode by a combined analysis of preset determination rules based on at least one of the UE-specific RRC message, the system information message and/or the common RRC message.

In an embodiment, the first indication includes the LBT mode, the preset condition including at least one of:
the received information being within a channel occupancy time (COT) indicated by control information;
the received information being within remaining time of the COT indicated by the control information;
a beam used by a physical downlink control channel (PDCCH), which carries the control information, satisfying quasi-co-location (QCL) with a beam used by the received information; and
demodulation reference signal (DMRS) port information and/or transmission configuration index (TCI)(TCI) of the PDCCH, which carries the control information, using the same spatial filter as the received information.

In an embodiment, the method further including at least one of the following:
the received information being a periodic CSI-RS or a semi-persistent CSI-RS;
the control information being DCI 2-0;
a state of the QCL being QCL typeD;
each TCI including a reference signal and/or at least one state of the QCL;
the beam used by the PDCCH being determined by the beam used by an associated reference signal;
the reference signal including at least a synchronization signal block (SSB) or the CSI-RS.

In an embodiment, the preset condition includes at least one of the following:
no control information being received, or the control information being received but the not indicating the COT and the received information being within an aperiodic CSI-RS or a dynamically scheduled physical downlink shared channel (PDSCH);
the aperiodic CSI-RS, or the dynamically scheduled PDSCH, or associated PDCCH, satisfying quasi-co-location with the received information;
resources occupied by the received information overlapping and/or being adjacent to resources occupied by the aperiodic CSI-RS or the dynamically scheduled PDSCH in the time domain.

In an embodiment, the first indication includes the non-LBT mode, the preset condition including:
receiving information in response to that a time domain symbol where the received information is located doesn't fall on an uplink slot and/or symbol.

Embodiments of the present application further provide a processing method, which may be applied to a network device (e.g., a base station, etc.), including:
S30: configuring a first indication, the first indication being configured for a terminal device to receive information and indicating a LBT mode and/or a non-LBT mode.

In an embodiment, the method further includes configuring, by a RRC message, a resource location transmitted by receiving information for the terminal device.

In an embodiment, the resource location includes at least one of a time domain location, a frequency domain location, and a code domain location.

In an embodiment, the RRC message includes at least one of a UE-specific RRC message, a system information message, and/or a common RRC message.

In an embodiment, the UE-specific RRC message includes at least one of a LBT mode, a non-LBT mode, and a non-received mode.

In an embodiment, the system information message and/or common RRC message includes at least one of the LBT mode, the non-LBT mode, and the non-received mode.

In an embodiment, the terminal device determines the LBT mode and/or the non-LBT mode by using a combined analysis of preset determination rules based on at least one of the specific RRC message, the system information message and/or the common RRC message.

In an embodiment, the method further includes at least one of: configuring for the terminal device whether the link to the terminal device is operating in LBT mode or non-LBT mode by the system information message and/or the common RRC message and/or the UE-specific RRC message.

Embodiments of the present application further provide a communication device, the communication device including a memory, a processor, a processing program is stored on the memory, the processing program when executed by the processor implements the processing method in any of the above embodiments.

Embodiments of the present application further provide a computer readable storage medium, the computer readable storage medium having a processing program stored thereon, the processing program, when executed by the processor, implements the processing method in any of the above embodiments.

The embodiment of the communication device and computer-readable storage medium of the present application can contain any embodiment of the above processing method of all technical features, the specification to expand and explain the content and the each embodiment of the above method is basically the same, which will not be repeated.

Embodiments of the present application also provide a computer program product, the computer program product includes computer program code, when the computer program code runs on the computer, the computer performs the method in various possible embodiments as described above.

Embodiments of the present application also provide a chip, which includes a memory for storing a computer program and a processor for calling and running the computer program from the memory, the device with the chip performs the method in the various possible implements as described above.

It will be understood that the above scenarios are intended as examples only and do not constitute a limitation on the application scenarios of the technical solutions provided by the embodiments of the present application, and the technical solutions of the present application may be applied to other scenarios. For example, it is known to those skilled in the art that as the system architecture evolves and new business scenarios emerge, the technical solutions provided by the embodiments of the present application are equally applicable to similar technical problems.

The above serial numbers of the present application are only for descriptive purposes and do not represent the merits of the embodiments. The steps in the method of the embodiments of the present application can be adjusted, combined and deleted in order according to the actual needs. The units in the apparatus of embodiments of the present application can be combined, divided and deleted according to the actual needs.

In the present application, the same or similar terminology concepts, technical solutions and/or application scenario descriptions are generally described in detail only at the first occurrence, and will not be repeated later for brevity. In understanding the technical solutions and other contents of the present application, the same or similar terminology concepts, technical solutions and/or application scenario descriptions, etc. that are not described in detail later can be referred to their relevant previous detailed descriptions.

In the present application, the description of each embodiment has its own focus, and the parts that are not detailed or recited in a certain embodiment can be referred to the relevant descriptions of other embodiments. The technical features of the present application can be combined in any way. For the sake of concise description, all possible combinations of the technical features of the above embodiments are not described. However, as long as there is no contradiction in the combination of these technical features, they should be considered as the scope of the present application.

From the above description of the embodiments, it is clear to those skilled in the art that the method of the above embodiments can be implemented with the aid of software plus the necessary common hardware platform, or of course with hardware, but in many cases the former is the better way of implementation. Based on this understanding, the technical solution of the present application, in essence, or the part that contributes to the prior art, may be embodied in the form of a software product, which is stored in a storage medium (e.g., ROM/RAM, disk, CD-ROM) as described above, and includes a number of instructions to enable a terminal device (which may be a cell phone, computer, server, controlled terminal, or network device, etc. ) to perform the method of each embodiment of the present application.

In the above embodiments, it can be achieved in whole or in part by a software, a hardware, a firmware, or any combination thereof. When implemented using software, it may be implemented in whole or in part in the form of a computer program product. A computer program product includes one or more computer instructions. When loaded and executed on a computer, the computer program instructions produce, in whole or in part, a process or function in accordance with an embodiment of the present application. The computer may be a general purpose computer, a specialized computer, a computer network, or other programmable device. Computer instructions may be stored in a com.puter-readable storage medium or transmitted from one computer-readable storage medium to another computer-readable storage medium, e.g., computer instructions may be transmitted from one website, computer, server, or data center to another website, computer, server, or data center, via wired (e.g., a coaxial cable, an optical fiber, a digital subscriber line) or wireless (e.g., infrared, wireless, microwave, etc.) means. The computer-readable storage media can be any available media that a computer can access or a data storage device such as a server, data center, etc. that contains one or more available media integrated. The available media may be a magnetic media, (e.g., floppy disks, memory disks, magnetic tapes), an optical media (e.g., DVDs), or a semiconductor media (e.g., solid state storage disks (SSDs)), etc.

The above is only a preferred embodiment of the present application, and is not intended to limit the scope of the present application. Any equivalent structure or equivalent process transformation using the specification of the present application and the drawings, or direct or indirect application in other related technical fields, are equally included in the scope of protection of the present application.

## Claims

1. A processing method, **characterized by** comprising:
S10: receiving at least one first indication; and
S20: receiving information according to the first indication, wherein the first indication indicates a listen before talk (LBT) mode and/or a non-LBT mode.

2. The method according to claim 1, wherein the first indication is carried in at least one radio resource control (RRC) message.

3. The method according to claim 2, wherein the method further comprises at least one of:
the RRC message comprising at least one of a UE-specific RRC message, a system information message and/or a common RRC message;
the UE-specific RRC message comprising at least one of: the LBT mode, the non-LBT mode, and a non-received mode; and
the system information message and/or the common RRC message comprising at least one of: the LBT mode, the non-LBT mode, and the non-received mode.

4. The method according to claim 3, wherein the method further comprises:
determining the LBT mode and/or the non-LBT mode by a combined analysis of preset determination rules based on at least one of the UE-specific RRC message, the system information message and/or the common RRC message.

5. The method according to any one of claims 1 to 4, wherein the first indication comprises the LBT mode, the S20 comprises:
receiving the information according to the first indication when the received information meets a preset condition.

6. The method according to claim 5, wherein the preset condition comprises at least one of:
the received information being within a channel occupancy time (COT) indicated by control information;
the received information being within remaining time of the COT indicated by the control information;
a beam used by a physical downlink control channel (PDCCH), which carries the control information, satisfying quasi-co-location (QCL) with a beam used by the received information; and
demodulation reference signal (DMRS) port information and/or transmission configuration index (TCI) of the PDCCH, which carries the control information, using the same spatial filter as the received information.

7. The method according to claim 6, wherein the method further comprises at least one of:
the received information being a channel state information-reference signal (CSI-RS);
the received information being a periodic CSI-RS or a semi-persistent CSI-RS;
the control information being DCI2-0;
a state of the QCL being QCL typeD;
each TCI comprising a reference signal and/or at least one state of the QCL;
the beam used by the PDCCH being determined by the beam used by an associated reference signal; and
the reference signal comprising at least a synchronization signal block (SSB) or the CSI-RS.

8. The method according to claim 5, wherein the preset condition comprises at least one of:
no control information being received, or the control information being received but not indicating the COT and the received information being within an aperiodic CSI-RS or a dynamically scheduled physical downlink shared channel (PDSCH);
the aperiodic CSI-RS, or the dynamically scheduled PDSCH, or associated PDCCH, satisfying quasi-co-location with the received information; and
resources occupied by the received information overlapping and/or being adjacent to resources occupied by the aperiodic CSI-RS or the dynamically scheduled PDSCH in a time domain.

9. The method according to any one of claims 1 to 4, wherein the first indication comprises the non-LBT mode, the S20 comprises:
receiving information, when a time domain symbol where the received information is located doesn't fall on an uplink slot and/or symbol.

10. A processing method, **characterizing by** comprising:
receiving information in response to received information satisfying a preset condition.

11. The method according to claim 10, wherein the receiving information comprises: receiving the information according to a first indication.

12. The method according to claim 11, wherein the method further comprises at least one of:
the first indication indicating a listen before talk (LBT) mode and/or a non-LBT mode;
the first indication being carried in at least one radio resource control (RRC) message.

13. The method according to claim 12, wherein the method further comprises at least one of:
the RRC message comprising at least one of a UE-specific RRC message, a system information message and/or a common RRC message;
the UE-specific RRC message comprising at least one of the LBT mode, the non-LBT mode, and a non-received mode; and
the system information message and/or common RRC message comprising at least one of the LBT mode, the non-LBT mode, and the non-received mode.

14. The method according to claim 13, further comprising:
determining the LBT mode and/or the non-LBT mode by a combined analysis of preset determination rules based on at least one of the UE-specific RRC message, the system information message and/or the common RRC message.

15. The method according to any one of claims 12 to 14, wherein the first indication comprises the LBT mode, the preset condition comprises at least one of:
the received information being within a channel occupancy time (COT) indicated by control information;
the received information being within remaining time of the COT indicated by the control information;
a beam used by a physical downlink control channel (PDCCH), which carries the control information, satisfying quasi-co-location (QCL) with a beam used by the received information; and
demodulation reference signal (DMRS) port information and/or transmission configuration index (TCI) of the PDCCH, which carries the control information, using the same spatial filter as the received information.

16. The method according to claim 15, further comprising at least one of:
the received information being a channel state information-reference signal (CSI-RS);
the received information being a periodic CSI-RS or a semi-persistent CSI-RS;
the control information being DCI2-0;
a state of the QCL being QCL typeD;
each TCI comprising a reference signal and/or at least one state of the QCL;
the beam used by the PDCCH being determined by the beam used by an associated reference signal; and
the reference signal comprising at least a synchronization signal block (SSB) or the CSI-RS.

17. The method according to any one of claims 12 to 14, wherein the preset condition comprises at least one of the following:
no control information being received, or the control information being received but the not indicating the COT and the received information being within an aperiodic CSI-RS or a dynamically scheduled physical downlink shared channel (PDSCH);
the aperiodic CSI-RS, or the dynamically scheduled PDSCH, or associated PDCCH, satisfying quasi-co-location with the received information; and resources occupied by the received information overlapping and/or being adjacent to resources occupied by the aperiodic CSI-RS or the dynamically scheduled PDSCH in the time domain.

18. The method according to any one of claims 12 to 14, wherein the first indication comprises the non-LBT mode, the preset condition comprises:
receiving information when a time domain symbol where the received information is located doesn't fall on an uplink slot and/or symbol.

19. A processing method, **characterized by** comprising:
S30: configuring a first indication, the first indication being configured for a terminal device to receive information and indicating a listen before talk (LBT) mode and/or a non-LBT mode.

20. The method according to claim 19, further comprising:
configuring, by a radio resource control (RRC) message, a resource location transmitted by receiving information for the terminal device.

21. The method according to claim 19 or 20, wherein the terminal device is configured that a link with the terminal device operates in the LBT mode or the non-LBT mode, via a system information message and/or a common RRC message and/or a UE-specific RRC message.

22. A communication device, **characterized by** comprising: a memory storing a processing program and a processor, wherein the processing program, when executed by the processor, implements the processing method according to any one of claims 1 to 21.

23. A computer readable storage medium, **characterized by** the computer readable storage medium storing a processing program, wherein the computer program, when executed by the processor, implements the processing method according to any one of claims 1 to 21.
